# EUROPEAN PATENT SPECIFICATION

(11) **EP 1 651 893 B1**
(45) Date of publication and mention of the grant of the patent: **03.11.2010**
(21) Application number: 04763045.4
(22) Date of filing: 29.06.2004
(51) Int. Cl.: F16K 5/06

(54) **EASILY SERVICED AND REPAIRED INSPECTABLE BALL VALVE**
LEICHT ZU WARTENDES UND ZU REPARIERENDES, INSPIZIERBARES KUGELVENTIL
SOUPAPE A BILLE CONTROLABLE FACILE A ENTRETENIR ET A REPARER

(30) Priority: 01.07.2003 IT MI20031344; 18.12.2003 IT MI20032513
(43) Date of publication of application: 03.05.2006
(73) Proprietor: FIMCIM S.P.A., 20121 Milano (MI) (IT)
(72) Inventor: CIMBERIO, Renzo, I-28017 San Maurizio d'Opaglio (IT)
(74) Representative: Ponzellini, Gianmarco
(86) International application number: PCT/EP2004/007040
(87) International publication number: WO 2005/005872

(56) References cited:
- AU-B- 674 154
- US-A- 3 920 036
- US-A- 4 562 860
- US-A- 4 587 990
- US-A1- 2002 145 126

## Description

### Background of the invention

The present invention relates to an easily serviced ball valve according to the preamble of claim 1.

Several ball valve arrangements, substantially formed by a valve body having an inlet fitting, an outlet fitting and, between said fittings, a ball shutter housing chamber with the shutter being coupled at the top to a drive rod, having an outer end portion which can be connected to a rotary handle, are already known. The ball shutter is tightly supported between two opposite annular gaskets which are engaged in corresponding seats formed in the valve body. Valve bodies made as a single piece or in several portions, and having three or four ball shutter fittings including either three or four ports, and valve bodies including other components, such as filters or the like, are moreover known. Said ball valves are used in a lot of different applications for delivering fluids and flowable materials, and for flush-mounting or under-plaster mounting, and, furthermore, are conventionally used in sanitary bath systems and the like.

Also known is the fact that for repairing ball valve leakages, caused, for example, by deformed or damaged plastic material gaskets, it is necessary to replace said gaskets. In other cases, for example, in flush-mounted valves for bath sanitary systems, after comparatively long non-use periods, or under variable thermal conditions, the sealing gaskets and/or driving rod can be locked or "glued" by limestone deposits or the like. An attempted forced opening of said valves can damage the sealing gaskets, break the driving rod and so on. In valves having a single-piece valve body, i.e. allowing the ball shutter to be withdrawn, a manual replacement of the sealing gaskets is very complex and difficult, both due to the difficult access thereto, respectively to their housing seats, and an unsafe proper installation of new sealing gaskets upon their application. This frequently compels to replace the overall valve, which, for a flush-mounted valve, can involve a demolition of the adjoining masonry for removing the valve.

U.S. 4,587,990 discloses a modular ball valve having an internal housing assembly which is modular and can be removed and replaced should the valve need repair. Said replaceable valve assembly 20 include an internal housing 22 having mounted therein a spherical valve element or shutter 23 which incudes a valve stem 23d integrally machined with said shutter. Said internal housing 22 is formed of sections 22a and 22b connected together by a bottom plate 24 and a top plate or cover 25, wherein said connections are carried out by means of a plurality of screws 24f, 33, 34. Two gaskets 27 and 29 are provided for supporting the shutter 23, wherein said gaskets 27 and 29 are, as usually, distinct.

The disclosed ball valve requires a high number of components and machining steps of the several sections forming said internal housing, does not allow to replace either the shutter or the shutter stem but always the unit formed by the shutter and the stem so that this valve is rather expensive, and requires long times for carrying out the disassembling and assembling handlings. Further, both gaskets are distinct so that they can not be simultaneously supported onto the shutter when the latter is outside said internal housing and a correct position of replaced gaskets within the internal housing is not assured and can compromise the uniform shutter movements as well as the gasket life itself.

U.S. 4,562,860 discloses a ball valve having easy maintenance features for extreme environments. The shown valve has a valve body and replaceable components and two distinct gaskets having substantially the same drawbacks and shortcomings set forth above for the valve according to the document 4,587,990.

### Summary of the invention

Accordingly, the aim of the present invention is to provide such a ball valve which can be easily serviced and, in which, in particular, the sealing gaskets can be simply and quickly replaced, both in outside and flush assembled valves, without the need of performing demolition masonry operations on the valve encompassing region.

According to the invention, this aim is achieved by a ball valve having the features of claim 1.

Further advantageous developments and embodiments of the valves according to the present invention are defined in the dependent claims.

The ball valves according to the invention provide a lot of important advantages.

Firstly, the sealing gaskets can be replaced in a very simple and quick manner, while assuring a proper installation position both for directly accessed and flush-mounted ball valves. The sealing gaskets are applied by a geometrical type of connection, though removably, on the ball shutter, without requiring additional machining operations or housing seats on the shutter. Thus, ball shutters can be made by conventional making methods, i.e. without additional costs, the proper engagement of the sealing gaskets and shutter being provided by the mentioned geometrical engagement of said sealing gaskets and shutter. The provision of the two sealing gaskets coupled to one another by a geometrical type of material coupling, provides a simultaneous proper location of the gaskets. Such a proper location of the sealing gaskets is moreover assured by the provision of locating abutments on the gaskets, cooperating with location counter-abutments formed on the valve body. The replacement of the sealing gaskets can be performed in a simple and quick manner, since said gaskets can be withdrawn from the shutter in a joined together relationship, the removable coupling of said shutter and rod being obtained by a coupling disc, which advantageously simultaneously defines the limit rotary 90° position of the shutter. The valve body has a cup cylindrical configuration, and can be easily made by using conventional methods and tools, preferably by forging and subsequent finishing operations, of a chip removing nature, on automatic tool machines. Moreover, the valves according to the invention allow to alternately use any gripping arrangements, for example of a butterfly, lever, cap, high handle type and so on. A further advantage is that the teachings of the invention can also be applied to three and four-way valves. The use of a rubber material, furthermore, provides the sealing gaskets with very high sealing and duration characteristics, as typically associated with a rubber material.

Moreover, in a further preferred embodiment the inner coupling end portion of the rotary or drive rod can be made by simple, quick and automatic operations, without increasing its making cost. Furthermore, since it is not necessary to provide additional coupling components, its cost is not practically affected. Moreover, the inventory requirements are very simplified. The engagement/disengagement of the rotary rod and shutter can be performed in a simple and quick manner, practically in a same manner as in prior rotary rod and shutter couplings, which, however, do not provide a firm longitudinal connection, between said rotary rods and ball shutters. Yet another advantage is that it is possible to provide, adjoining the coupling end portion of the rotary rod, a contoured portion allowing to simultaneously turn, together with the shutter, at least a component, such as a locating disc.

### Brief description of the drawings

Further characteristics, advantages and details of the easily serviced ball valves according to the present invention will become more apparent hereinafter from the following disclosure of preferred embodiments thereof, which are shown by way of an example and illustrated in the accompanying drawings, where:
Figure 1 is an exploded view illustrating a flush-mounted ball valve in a first embodiment;
Figure 2 is a middle longitudinal cross-section view through the valve of figure 1, in an assembled condition thereof;
Figure 3 is a front view illustrating the valve of figures 1 and 2 installed in a masonry;
Figures 4 and 4A are top plan view of the valve shown in figures 1-3, without the driving screw element thereof, respectively at an opening and closing position;
Figure 5 shows the driving rod-shutter-basket gasket assembly in a condition thereof withdrawn from the valve body;
Figure 6 is a further exploded view, analogous to figure 1, of a valve provided for outside assembling, i.e. which can be directly accessed;
Figures 7, 8, 9 and 10 respectively show a longitudinal middle cross-sectional view taken through the valve shown in figure 6, with respectively a different driving handle;
Figure 11 is a further exploded view, analogous to figures 1 and 6, illustrating a modified embodiment with a three-way shutter;
Figure 12 is a front view, taken according to the arrow A of figure 11, of the assembled valve in figure 11, including a driving handle;
Figure 13 is a top plan view of the valve shown in figure 12; ,
Figure 14 is a cross-sectional view according to the cross-section plane XIV-XIV of figure 13;
Figure 15 shows a cross-sectional view according to the section plane XV -XV of figure 13;
Figure 16 is an exploded view illustrating a further preferred embodiment of an inspectable and easily repaired and serviced ball valve;
Figure 17 is a perspective view showing the ball shutter of the valve illustrated in figure 16;
Figure 18 is a middle cross-sectional longitudinal view through the shutter of figure 17;
Figures 19 is a front view showing the rotary rod of the valve shown in figure 16; and
Figure 20 is a middle cross-sectional view in a vertical plane through the valve shown in figure 16.

### Description of the preferred embodiments

For clearness, the drawing figures have been shown on different scales, like parts having like reference numbers.

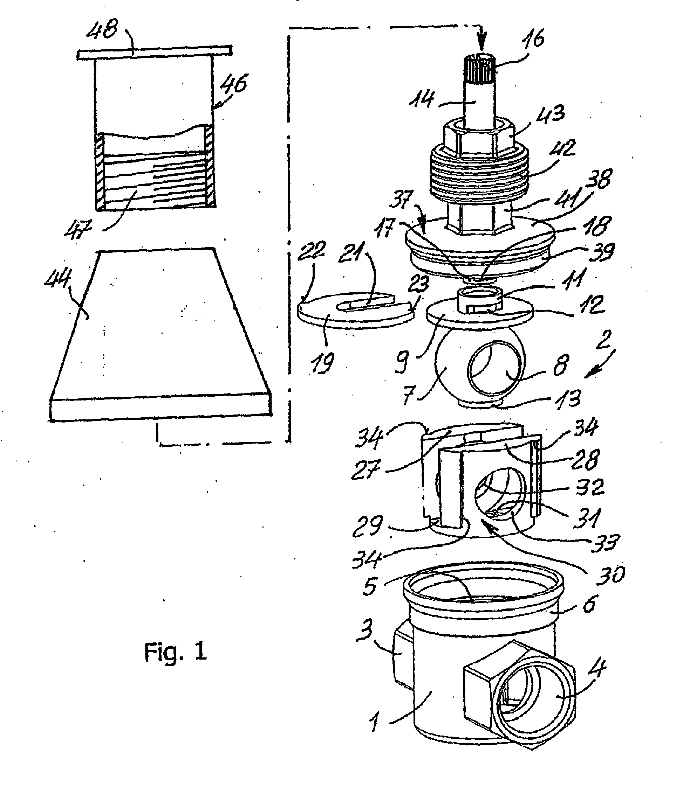

Reference will be at first made to the flush-mounted valve shown in figures 1 to 5.

According to the invention, the valve body 1 of the flush-mounted valve 2 has substantially a cup cylindrical shape, with an inlet fitting 3, an outlet fitting 4, an internal chamber 5 and a collar 6. The ball shutter 7 comprises, in the shown exemplary embodiment, a throughgoing hole 8 and a top disc flange 9 having a slotted collet 11, provided with a rectilinear notch 12. At the bottom thereof, the shutter 7 comprises a circular projection 13, which will be disclosed in a more detailed manner hereinafter. The shutter 7 can be rotatively driven by a driving rod 14, having a top end portion 16 and a bottom end portion 17 provided, in the shown embodiment, with a rectilinear slot 18 which, upon engaging the driving rod 14 in the slotted collet 11, can be aligned with the notch 12 of the slotted collet 11. In the aligned condition of said notch 12 and slot 18, it is possible to engage a coupling disc 19 having a U-shape slit 21, the width of which corresponds to the spacing of said notch 12 and slot 18, and the opposite outer diametrical point of the collet 11, thereby the coupling disc 19 will operate as a "key" to provide a removable rigid coupling between said driving rod 14 and shutter 7.

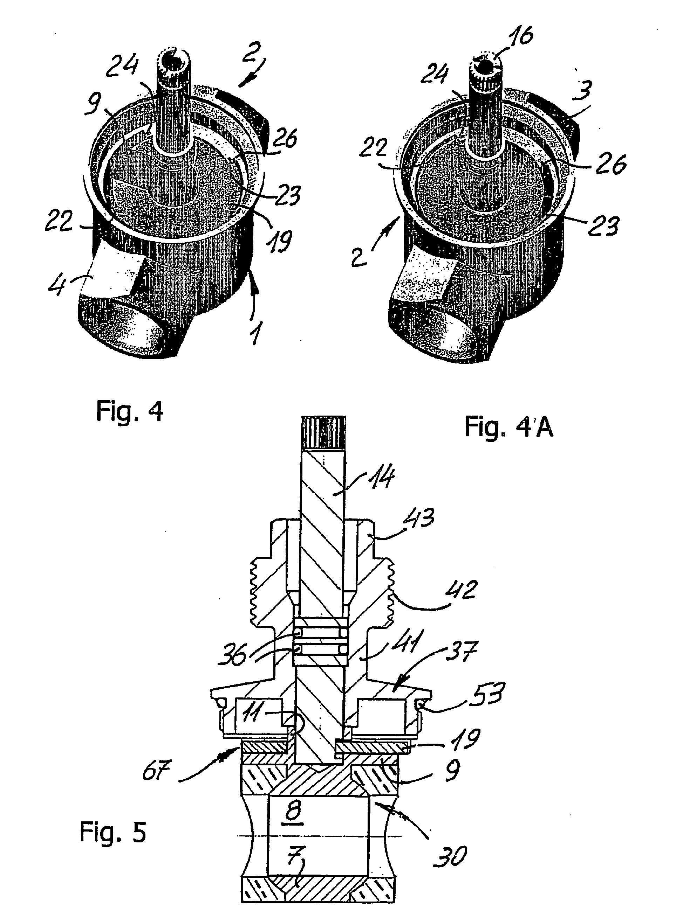

As shown in figure 1, the coupling disc 19 comprises moreover two abutments 22, 23 cooperating with two counter-abutments 24, 26 formed in the valve body 1 to define the 90° rotary movement of the ball shutter 7. As shown in figures 4 and 5, the coupling disc 19 is arranged above the disc flange 9 of the shutter 7.

According to the present invention, the sealing gaskets cooperating with the shutter 7 of figure 1, comprise two wings or legs 27, 28 which, in the shown embodiment, have an opposite cylindrical sector configuration, said opposite cylindrical sectors being coupled by a bottom 29 having a hole 31 for engaging therein the circular bottom projection 13 of the shutter 7. Each sealing wing or leg comprises a throughgoing hole 32 and 33 and, on the outer surface thereof, anti-rotary abutments 34 cooperating with corresponding counter-abutments, not shown, in the valve body 1 for properly arranging and stopping the sealing gaskets inside the valve body 1. Thus, the sealing gaskets 27, 28 will form a single-piece gasket body 30 having, for example, a basket shape.

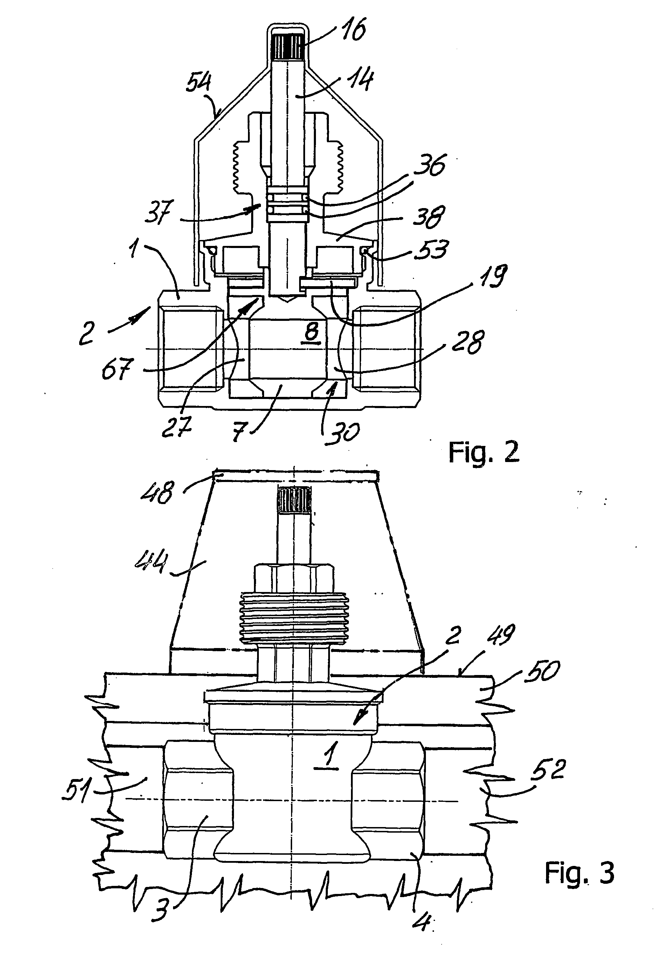

In the flush-mounted valve 2 shown in figures 1-5, the driving rod 14 is provided, in a per se known manner, with two O-rings 36, figure 2, and is tightly engaged in a drive screw element 37 forming at the bottom thereof a cover 38 threaded at 39, and a stem 41 having a thread 42 and a nut end portion 43, or the like, for engagement with a wrench or the like. The reference number 44 shows a covering cap and the reference number 46 shows a threaded plug element which can be engaged in the cap 44 and the thread 47 of which can be screwed on the thread 42 of the driving screw element 37, the disc-like head 48 thereof locking the covering cap 44 against the surface 49 of the masonry 50, figure 3, said surface 49 being optionally finished by tiles or at will. The reference numbers 51 and 52 show the end portions of the pipes coupled to the valve 2. Finally, the reference number 53 of figure 2 shows an O-ring engaged in the drive screw element 37, and the reference number 54 shows a disposable protecting sleeve, for example made of a synthetic material, fitted on the end portion, for example fluted, 16 of the driving rod 14 and adapted to operate as a protecting element before installation and during the finishing of the masonry by mortar or plaster, or before applying the cap and drive gripper, such as a handle or the like.

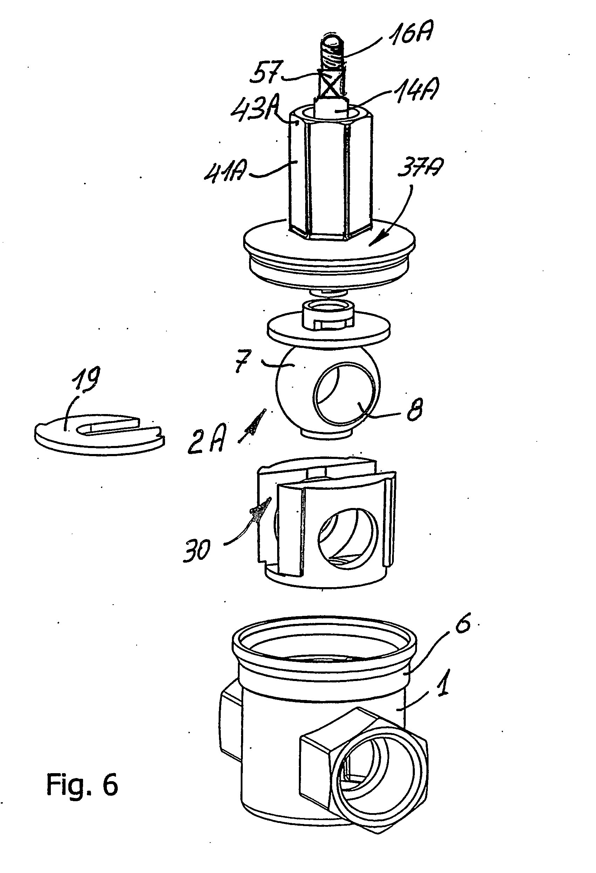

Reference is now made to the embodiment of a ball valve 2A according to the invention provided for assembling on the outside of the masonry, i.e. of a directly accessed type as shown in figure 6.

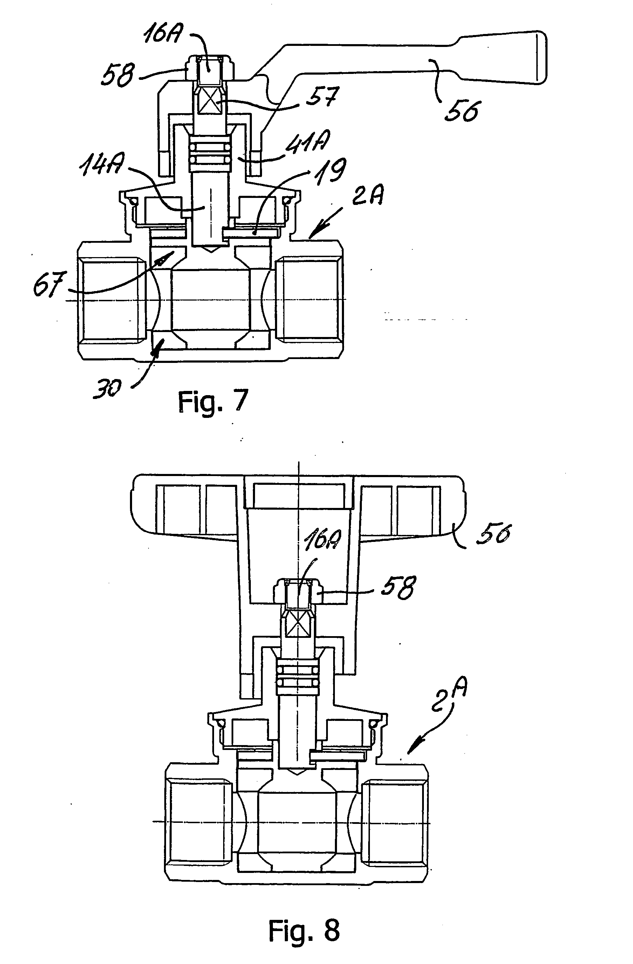

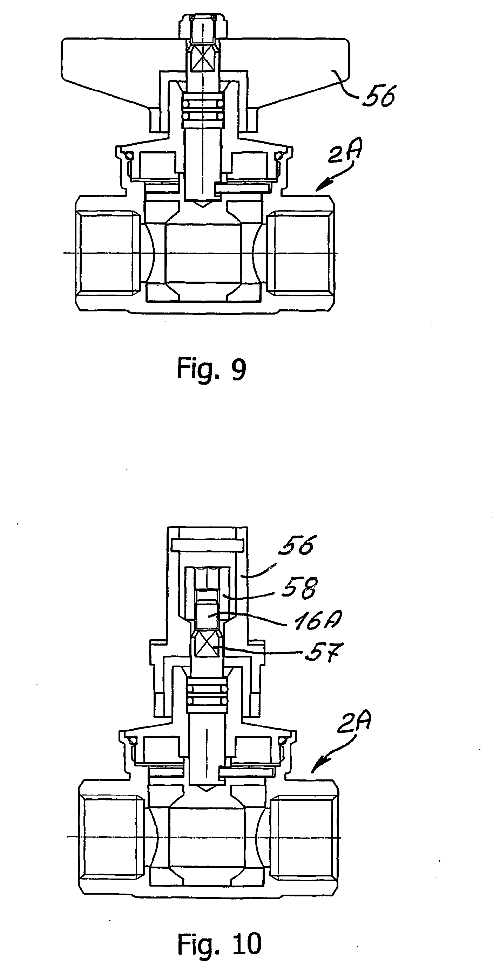

Differently from the flush-mounted valve 2 embodiment as previously disclosed, the driving screw element 37A comprises an unthreaded stem 41A and, in the shown embodiment, having preferably a hexagonal configuration to be directly engaged with an assembling and disassembling torque wrench. The driving rod 14A is held in a rigid coupling relationship with the shutter 7 by the coupling disc 19, as in the previous embodiment. For coupling to a drive handle 56, the outer end portion of the drive rod 14A comprises, in a per se known manner, a quadrangular coupling portion 57 for connection with the handle 56 and a threaded end portion 16A for clamping the handle by a clamping nut 58. From figures 7 to 10, showing a middle longitudinal cross section analogous to figure 2, it is possible to note that the gripping element 56 can comprise a lever handle (figure 7), a high knob handle (figure 8), a butterfly handle (figure 9), a cup handle (figure 10) and so on.

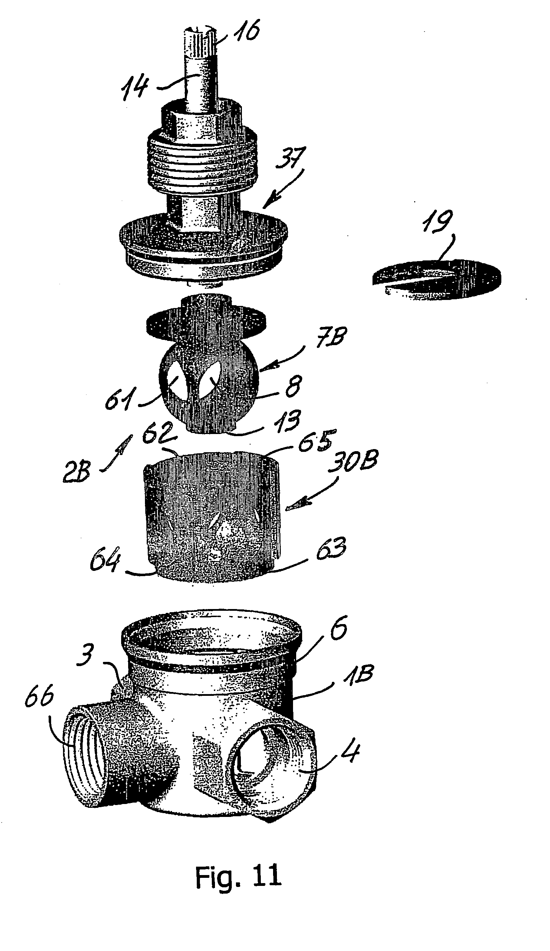

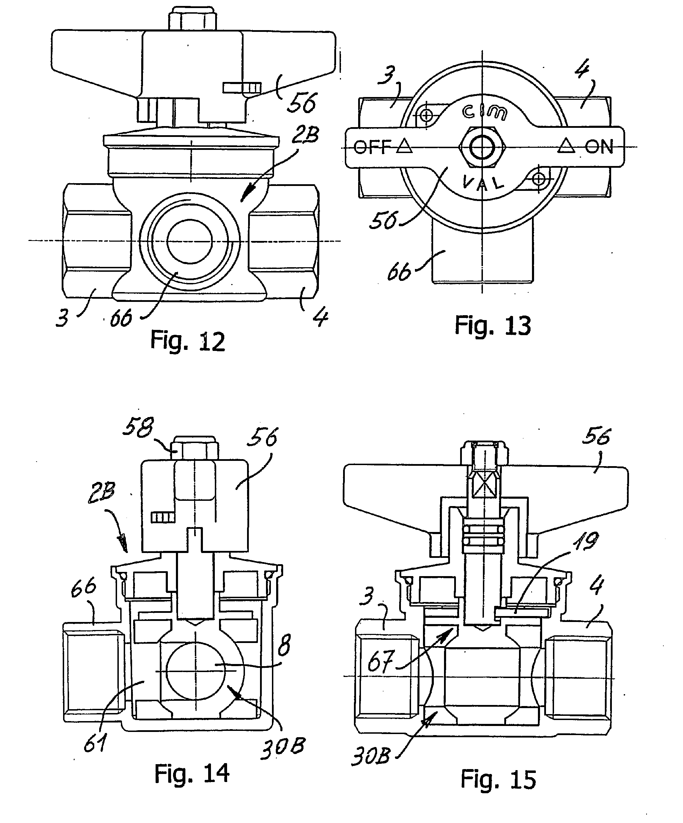

Reference is now made to figure 11 to 15 illustrating a further modified embodiment, in which the ball shutter 7B comprises three ports and, more specifically, a throughgoing hole 8 and a cross hole 61 outward leading to said throughgoing hole 8, as is conventional in three way ball valves. Accordingly, the related sealing gaskets will also be formed as a four wing 62, 63, 64, 65 gaskets, the wings thereof are differentiated from the wings or legs 27 and 28 of the embodiment shown in figures 1-5, because of a less length of the individual wings or legs, wherein, actually, three wings 62, 63 and 64 will operate as sealing gaskets for three-way shutters, whereas the fourth wing 65 will operate for completing the basket 39B and can be either provided or not with a throughgoing hole. For a four-way ball shutter, the fourth wing 65, on the contrary, will comprise a dedicated throughgoing hole.

The sealing gaskets 62, 63, 64 and 65 will form likewise a basket body 30b with the same features of the body 30 of the gaskets 27, 28 of figure 1-5. The body 1B of the valve 2B is additionally provided with a fitting 66 to be coupled with the above mentioned hole 61. With respect to the remaining construction, also for this embodiment are true all the statements which have been previously indicated for the flush and outside mounted embodiment of the valve including the throughgoing hole 8 according to the invention.

### Operation

With the basket bodies 30, 30B of the sealing gaskets 27, 28 and 62, 63, 64 and 65, said sealing gaskets can initially be spread for opening to be applied on the shutter 7, 7B, and, upon opening, the gasket wings will resiliently close against the shutter 7, 7B, thereby the basket body 30; 30B will be supported by a geometrical type of connection on the shutter. Owing to the very simple assembling, the assembling operation can be advantageously performed in an automatic manner. After having applied the body 30; 30B of the basket sealing gaskets on the shutter 7; 7B, the latter will be associated with the rod 14; 14A and removably coupled thereto by applying the coupling disc 19, thereby the assembly including the driving rod 14; 14A, the drive screw element 37, 37A, the shutter 7; 7B and body 30; 30B of the sealing gaskets will form a single piece 67 which can be immediately engaged in the body of the cup valve 1; 1B, by properly arranging the wings or legs 27, 28; 62, 63, 64 and 65. After having engaged the basket of the sealing gaskets 30; 30B in the body 1; 1B of the valve 2; 2B and controlled the location of the coupling disc 19 with respect to the counter-abutments 24, 26 of the valve body, it will be possible to screw engage the drive screw element 37; 37A, that is the cover 38 in the collar 6 of the valve body, by driving by a torque wrench the hexagonal end portion 43; 43A of the stem 41; 41A of the drive screw element 37; 37A.

Then, for the thus installed flush-mounted valve, the covering cap 44 and the locating threaded plug element 46 will be applied.

For replacing sealing gaskets, or the gasket basket 30, 30B it is sufficient (for the flush-mounted valves upon removing the threaded plug element 48 and covering cap 44) to screw off the drive screw element 37; 37A and withdraw it and the coupled shutter 7, 7B and gasket basket 30; 30B. The gasket replacement or basket 30; 30B withdrawal operation, as above mentioned, and the application of the new gasket basket 30; 30B can be performed, as it should be apparent, in a very short time, and, after this operation, it will be sufficient to screw-on again the drive screw element 37; 37A, that is the cover 38 in the collar 6 of the body 1; 1B of the valve 2, 2A.

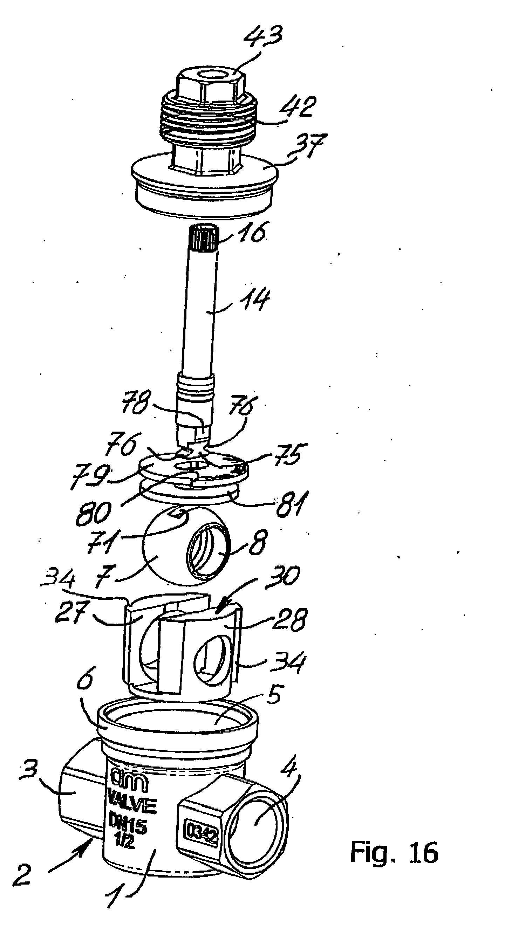

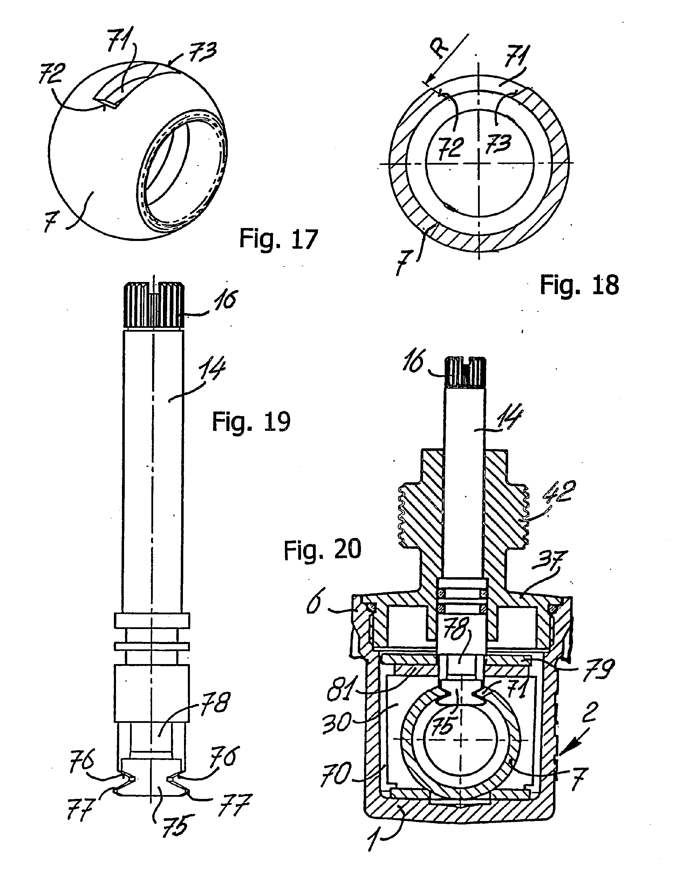

The inspectable and easily repaired and serviced ball valve 2 shown in the figures 16 to 20 comprises a valve body 1 having an inlet fitting 3 and an outlet fitting 4 or, vice versa, a middle chamber 70 (figure 20) housing the ball shutter 7 and ending, at the top thereof, in a threaded collar 6. The basket sealing gasket of the shutter 7 is indicated by 30, whereas the drive or rotary rod is indicated by 14. The reference number 37 shows a threaded plug element with said cover 38, which can be screw engaged in the collar 6 and operates as said rotary rod 14 housing and guiding element (figure 20).

The ball shutter 7 shown in figure 17 has a hollow construction and comprises a slot seat or recess 71, the opposite narrow sides 72, 73 of which are beveled or inward rounded from the shutter 7, i.e. the outer length of the slot 71 being greater than the inner length thereof. In the shown embodiment, said sides 72, 73 are rounded with a rounding radius R, and are made by using a circular tool, such as a milling tool.

The rotary rod 14 comprises an outer end portion, generally indicated by 16, for coupling any desired rotary elements, such as a wheel, butterfly element, lever and the like, not shown, and an inner end portion or coupling portion 75, which is designed for providing a geometrical and undercutting connection in the seat 71 of the shutter 7 and has, in the shown embodiment, a dovetail configuration, with the two opposite V-shape cavities 76 horizontally arranged. Preferably, the opposite bottom narrow sides 77 are rounded.

As shown in figure 20, the length of the coupling end portion 75 is smaller than the outer length of the slot seat or recess 71 of the shutter 7, but larger than the inner length of said slot 71, thereby allowing to form an undercutting type of engagement between said rod 14 and shutter 7. Figure 20 shows moreover the clearance provided between the coupling end portion 75 and the slot seat or recess 71.

Adjoining the inner end portion 75, i.e. between said inner end portion 75 and the stem of the rotary rod 14, a contoured portion 78 for providing a rotatively rigid coupling with at least a rotary component, in the shown embodiment a locating disc 79, having two stop steps 80 (of which only one is shown), and a spacer disc, for example of a synthetic material 81, is provided. Figure 20 shows the assembled condition of the valve illustrated in figure 16.

The assembling operation of this valve embodiment is as follows:

After having engaged the discs 79 and 81 on the portion 78 of the rod 14, the dovetail end portion 75 is obliquely arranged in the slot 71, so as to bear against a side 72 or 73 of said slot, the rotary or drive rod 14 being then straightened with an axis orthogonally arranged with respect to the shutter 7, while providing an undercutting engagement between the inner surface of the shutter element 7 near the slot 71 and bottom sides of the V-shape cavity 76 of the coupling end portion 75 of said rod 14. Thus, notwithstanding a possible lateral offset, the rod 14 and shutter 7 will be coupled, in a rotatively rigid condition, thereby being prevented from axially separating from one another. Then, on the shutter 7 the basket sealing gasket 30 is fitted, and the thus made assembly 14, 79, 81, 7 and 30 is engaged in the valve body 1, where an application of the plug element 37 with cover 38 will automatically properly locate the rod 14 with respect to the shutter 7 and the valve body 1.

From the above functional and constructional disclosure, it should be apparent that the valves according to the invention allow to efficiently achieve the stated aim and the above mentioned advantages, and, in particular, a very easy servicing both for outside and flush mounted ball valves, without requiring, in the latter case, any operations for the demolition of masonry, coating tiles and the like.

From performed tests it has been found that the subject sealing gaskets operate in a very reliable manner under different operating conditions, with different temperature fluids, and with different flowable materials.

Those skilled in the art can make modifications and variations, for example by forming the drive rod and shutter as a single piece, replacing the individual components by functionally equivalent elements, modifying the gasket wing shape, replacing the coupling disc for example by a pin element having abutment forming end portions and so on, without departing from the scope of the invention.

In addition to using a rubber material as a gasket body material, it would also be possible to use plastics material. Moreover, the valves can also be made of synthetic or plastics materials, rubber and the like.

All the provided features can be used in any combinations at will.

Moreover, also ball faucets using the inventive teaching will come within the scope of the invention.

## Claims

1. An easily serviced ball valve (2) comprising:
a valve body (1) with at least an inlet fitting (3), an outlet fitting (4) and a middle chamber (5),
a ball shutter (7) with a shutter rotary rod (14),
said middle chamber (5) housing said ball shutter (7) and opposite sealing gaskets (27, 28) for tightly supporting said shutter (7) in said middle chamber (5), and
a cover (38) which may be removably fastened to said valve body (1) and closes said middle chamber (5) thereof,
**characterized in that** said sealing gaskets (27, 28) have a wing-like form and at the bottom thereof are connected by a common body (29) and form a single cylindrical basket-like body (30, 30B) which can be fitted from outside onto the shutter (7) by a geometrical type of connection, adapted to be housed in a stable manner, i.e. in a non rotary manner, in the valve body (1) and to be withdrawn from the valve body (1) together with said shutter (7) for servicing thereof,
wherein said shutter (7) and shutter rotary rod (14) form two distinct pieces (7, 14) which are removably coupled by a geometrical type of engagement, and
wherein said valve body (1) has a substantially cylindrical cup configuration with an internal threaded collar (6) having a diameter larger than the outer diameter of said sealing gasket body (30, 30B), said threaded collar (6) housing therein said cover (38) which is threaded, houses said drive rod (14) and at the bottom thereof is provided with a sealing ring.

2. A ball valve (2) according to claim 1, **characterized in that** on the outer surface of said single-piece gasket wings (27, 28) are provided locating abutments (34) which cooperate with locating counter-abutments formed on said valve body (1).

3. A ball valve (2) according to claim 1, **characterized in that** the geometrical engagement removable coupling of said rotary rod (14) and shutter (7) is performed with clearance and an undercutting type of engagement.

4. A ball valve (4) according to claim 3, **characterized in that** the coupling clearance between said rotary rod (14) and shutter (7) and the configuration of a contoured inner end portion (78) of the rotary rod (14) are adapted to simultaneously allow an easy engagement/disengagement operation and a rotatively rigid and undercutting engagement coupling between said rotary rod (14) and shutter (7).

5. A ball valve (2) according to claim 3, **characterized in that** the undercutting geometrical engagement-coupling is obtained by dovetail shaping a coupling end portion (75) of the rotary rod (14) and a slot seat (71) in the hollow ball shutter (7).

6. A ball valve (2) according to claim 5, **characterized in that** the slot seat (71) of the shutter (7) comprises rounded or inward beveled opposite narrow sides (72, 73) of said shutter (7), and the rotary rod coupling end portion (75) has bottom rounded narrow sides (77).

7. A ball valve (2) according to one or more of the preceding claims 3 to 6, **characterized in that** between the contoured coupling end portion (75) of the rotary rod (14) and the stem of said rotary rod (14), a geometrical coupling contoured portion (78) with one or more rotatively rigid rotary components with said rotary rod (14) is provided.

8. A ball valve (2) according to claim 1, **characterized in that** between said driving rod (14) and ball shutter (7) a removably coupling element (19) is arranged.

9. A ball valve (2) according to claim 8, **characterized in that** said coupling element (19) is a disc-like element having an outward opened U-shape cavity (21), and including parallel sides engaging, by a geometrical type of coupling, in notches/slots (12) formed in a collar (11) rigid with said shutter (7) and in an inner end portion (17) of said drive rod (14), engaged in said shutter collar (11).

10. A ball valve (2) according to claim 9, **characterized in that** said disc element (19) has an outer circumference on which are formed two abutments (22, 23) cooperating with counter-abutments formed on the valve body to define a 90° rotary movement limit for said shutter (7).

11. A ball valve (2) according to claim 1, **characterized in that** said threaded cover (38) forms the bottom end portion of a screw element (37) which has a stem (41) having, at least at a top thereof, a hexagonal or quadrangular end portion (43), adapted for engagement with a torque wrench or the like.

12. A ball valve (2) according to claim 11, **characterized in that** on said stem (41) of said screw element (37) a thread (42) is formed.

13. A ball valve (2) according to claims 1, 11 and 12, **characterized in that** said flush-mounted valve (2) comprises conventional finishing components, such as a cap (44) for covering said screw element (37), a drive gripping portion, for example in the form of a handle, and the like.

14. A ball valve (2) according to at least claims 1, 8 and 9, **characterized in that** said ball shutter (7) comprises a top locating disc-like flange (9) and said slotted collar (11).

15. A ball valve (2) according to claim 14, **characterized in that** said ball shutter (7) comprises an outward extending bottom cylindrical projection (13) which can be engaged in a corresponding cylindrical opening (31) formed in said bottom (29) of the sealing gasket body (30) or the ball shutter bottom can be engaged directly in said opening (31).

16. A ball valve (2) according to one or more of the preceding claims, **characterized in that** said shutter (7B) is either a three-way or a four-way shutter, that the sealing gasket body (30B) has a basket configuration with four gasket wings (62, 63, 64, 65), and that said valve body (1B) correspondingly comprises three or four connection fittings (3, 4, 66).

17. A ball valve according to one or more of the preceding claims, **characterized in that** said drive rod (14A) has an outer end portion including a polygonal portion (41A) for engagement with a handle (56), and a threaded end portion (16A, 57) for housing a handle clamping nut, said handle (56) being replaceable and formed with any desired arrangement, for example as a lever, a high knob, a butterfly handle, a cap handle and so on.

## Patentansprüche

1. Wartungsfreundliches Kugelventil (2) umfassend:
einen Ventilkörper (1) mit mindestens einem Einlassanschluss (3), einem Auslassanschluss (4) und einem Zwischenabteil (5),
einen Kugelverschluss (7) mit einer Verschlussdrehstange (14),
wobei der benannte Zwischenabteil (5) den benannten Kugelverschluss (7) und entgegengesetzte Dichteinsätze (27, 28) zur Dichtlagerung des benannten Verschlusses (7) im benannten Zwischenabteil (5) aufnimmt, und
eine Abdeckung (38), die am benannten Ventilkörper (1) lösbar befestigt werden kann und den benannten Zwischenabteil (5) davon schließt,
**dadurch gekennzeichnet, daß** die benannten Dichteinsätze (27, 28) flügelförmig sind und an deren Boden durch einen gemeinsamen Körper (29) miteinander verbunden sind und einen einzigen korbähnlichen, zylindrischen Körper (30, 30B) bilden, der außen auf den Verschluss (7) durch eine formschlüssige Verbindung aufgelegen werden kann und zur festen, d.h. nicht drehenden,
Aufnahme im Ventilkörper (1) und zum Ausziehen aus dem Ventilkörper (1) zusammen mit dem benannten Verschluss (7) zu Wartungszwecken vorgesehen ist,
worin der benannte Verschluss (7) und die benannte Verschlussdrehstange (14) zwei getrennte Teile (7, 14) bilden, die formschlüssig lösbar verbunden sind, und
worin der benannte Ventilkörper (1) eine wesentlich zylindrische, tassenförmige Gestalt aufweist, mit einem mit Innengewinden versehenen Kragen (6), dessen Durchmesser länger ist als der Außendurchmesser des benannten Dichteinsatzkörpers (30, 30B) ist, wobei der benannte mit Gewinden versehene Kragen (6) die benannte Abdeckung (38) aufnimmt, die mit Gewinden versehen ist, die Antriebsstange (14) aufnimmt und an deren Boden mit einem Dichtring ausgestattet ist.

2. Kugelventil (2) nach Anspruch 1, **dadurch gekennzeichnet, daß** an der Außenfläche der benannten einstückigen Dichteinsatzflügel (27, 28) Positionieranschläge (34) vorgesehen sind, die mit am benannten Ventilkörper (1) geformten Positioniergegenanschlägen zusammenarbeiten.

3. Kugelventil (2) nach Anspruch 1, **dadurch gekennzeichnet, daß** die formschlüssige, lösbare Verbindung der bennanten Drehstange (14) mit dem Verschluss (7) mit Spiel und einer hintergeschnittenen Verbindung erhalten wird.

4. Kugelventil (2) nach Anspruch 3, **dadurch gekennzeichnet, daß** das Verbindungsspiel zwischen der benannten Drehstange (14) und dem Verschluss (7) und die Ausgestaltung eines profiliertes Innenendteils (78) der Drehstange (14) so konfiguriert sind, ein einfaches Einkuppeln/Auskuppeln und eine drehsteife, hintergeschnittene Verbindung zwischen der benannten Drehstange (14) und dem Verschluss (7) gleichzeitig zu ermöglichen.

5. Kugelventil (2) nach Anspruch 3, **dadurch gekennzeichnet, daß** die hintergeschnittene, formschlüssige Verbindung erhalten wird, indem ein verbindender Endteil (75) der Drehstange (14) und eine geschlitzter Sitz (71) im hohlen Kugelverschluss (7) schwalbenschwanzförmig ausgebildet sind.

6. Kugelventil (2) nach Anspruch 5, **dadurch gekennzeichnet, daß** der geschlitzte Sitz (71) des Verschlusses (7) entgegengesetzte, gerundete oder innenabgekantete enge Seiten (72, 73) des benannten Verschlusses (7) aufweist, und der verbindende Drehstangenendteil (75) bodengerundete enge Seiten (77) besitzt.

7. Kugelventil (2) nach einem oder mehreren der vorherigen Ansprüche 3 bis 6, **dadurch gekennzeichnet, daß** zwischen dem verbindenden, profilierten Endteil (75) der Drehstange (14) und dem Schaft der benannten Drehstange (14) ein formschlüssiger, profilierter Teil (78) mit einem oder mehreren drehsteifen Drehbauteilen mit der benannten Drehstange (14) vorgesehen ist.

8. Kugelventil (2) nach Anspruch 1, **dadurch gekennzeichnet, daß** zwischen der benannten Antriebsstange (14) und dem Kugelverschluss (7) ein lösbare Verbindungselement (19) angeordnet ist.

9. Kugelventil (2) nach Anspruch 8, **dadurch gekennzeichnet, daß** das benannte Verbindungselement (19) ein scheibenförmiges Element ist mit einer nach außen geöffneten U-förmigen Ausnehmung (21) und mit parallelen Seiten, die formschlüssig in Kerben/Schlitze (12), die in einem mit dem benannten Verschluss (7) steif verbundenen Kragen (11) ausgebildet sind, und in einen Innenendteil (17) der benannten Drehstange (14), die im benannten Verschlusskragen (11) eingreift, eingreifen.

10. Kugelventil (2) nach Anspruch 9, **dadurch gekennzeichnet, daß** das benannte scheibenförmige Element (19) einen Außenumfang besitzt, an dem zwei Anschläge (22, 23) ausgebildet sind, die mit am Ventilkörper geformten Gegenanschlägen zusammenarbeiten, um eine 90°-Drehbewegungsgrenze für den benannten Verschluss (7) zu definieren.

11. Kugelventil (2) nach Anspruch 1, **dadurch gekennzeichnet, daß** die benannte mit Gewinden versehene Abdeckung (38) den Bodenendteil eines Schraubenelementes (37) bildet, das einen Schaft (41) besitzt, der mindestens an dessen Kopf einen sechseckigen oder viereckigen Endteil (43) zum Eingriff mit einem Drehmomentschlüssel oder ähnlichem aufweist.

12. Kugelventil (2) nach Anspruch 11, **dadurch gekennzeichnet, daß** am benannten Schaft (41) des benannten Schraubenelementes (37) ein Gewinde (42) ausgebildet ist.

13. Kugelventil (2) nach den Ansprüchen 1, 11 und 12, **dadurch gekennzeichnet, daß** das benannte bündig montierte Ventil (2) geläufige Fertigstellungsbestandteile umfasst, wie z.B. eine Kappe (44) zur Abdeckung des benannten Schraubenelementes (37), einen Antriebsgriff, z.B. als Handgriff, und ähnliche.

14. Kugelventil (2) nach mindestens den Ansprüchen 1, 8 und 9, **dadurch gekennzeichnet, daß** der benannte Kugelverschluss (7) einen scheibenförmigen Kopfpositionierflansch (9) und den benannten geschlitzten Kragen (11) umfasst.

15. Kugelventil (2) nach Anspruch 14, **dadurch gekennzeichnet, daß** der benannte Kugelverschluss (7) einen sich nach außen erstreckenden, zylindrischen Bodenvorsprung (13) umfasst, der in eine entsprechende, im benannten Boden (29) des Dichteinsatzkörpers (30) geformte zylindrische Öffnung (31) eingegriffen werden kann, oder der Kugelverschlussboden kann unmittelbar in die benannte Öffnung (31) eingegriffen werden.

16. Kugelventil (2) nach einem oder mehreren der vorherigen Ansprüche, **dadurch gekennzeichnet, daß** der benannte Verschluss (7B) ein Dreiwege- oder Vierwegeverschluss ist, daß der Dichteinsatzkörper (30B) korbförmig ist mit vier Dichtungsflügeln (62, 63, 64, 65), und daß der benannte Ventilkörper (1B) drei oder vier Verbindungsanschlüsse (3, 4, 66) entsprechend umfasst.

17. Kugelventil (2) nach einem oder mehreren der vorherigen Ansprüche, **dadurch gekennzeichnet, daß** die benannte Antriebsstange (14A) einen Außenendteil mit einem vielseitigem Teil (41A) zum Eingriff mit einem Handgriff (56) und einen mit Gewinden versehenen Endteil (16A, 57) zur Aufnahme einer Handgriffsperrmutter besitzt, wobei der benannte Handgriff (56) ersetzbar und mit einer beliebigen Anordnung ausgebildet ist, z.B. als Hebel, als Hochgriff, als Flügelhandgriff, als Kappenhandgriff usw.

## Revendications

1. Soupape à bille à entretien facile (2) comprenant:
un corps de soupape (1) avec au moins un raccord d'entrée (3), un raccord de sortie (4) et un compartiment intermédiaire (5),
un obturateur à bille (7) avec une tige rotative d'obturateur (14),
ledit compartiment intermédiaire (5) logeant ledit obturateur à bille (7) et des joints d'étanchéité opposés (27, 28) pour le support de tenue dudit obturateur (7) dans ledit compartiment intermédiaire (5), et
une couverture (38) pouvant être fixée de façon amovible audit corps de soupape (1) et fermant ledit compartiment intermédiaire (5) de ce dernier,
**caractérisée en ce que** lesdits joins d'étanchéité (27, 28) ont une forme en aile et sont reliés dans la partie inférieure par un corps commun (29) et forment un corps en panier cylindrique individuel (30, 30B) pouvant être monté de l'extérieur sur l'obturateur (7) par une liaison géométrique, apte à être logé de façon stable,
c'est-à-dire non rotative, dans le corps de soupape (1) et à être retiré du corps de soupape (1) avec ledit obturateur (7) pour les opérations d'entretien,
où ledit obturateur (7) et ladite tige rotative d'obturateur (14) forment deux pièces différentes (7, 14) reliées de façon amovible par un engagement géométrique, et
où ledit corps de soupape (1) a une configuration en tasse substantiellement cylindrique avec une collerette à filetage intérieur (6) ayant un diamètre supérieur au diamètre extérieur dudit corps de joint d'étanchéité (30, 30B), ladite collerette filetée (6) logeant à son intérieur ladite couverture (38) qui est filetée, loge ladite tige de commande (14) et est munie dans sa partie inférieure d'une bague d'étanchéité.

2. Soupape à bille (2) selon la revendication 1, **caractérisée en ce que** sur la surface extérieure desdites ailes de joint d'une seule pièce (27, 28) sont présentes des butées de positionnement (34) coopérant avec des contre-butées de positionnement formées sur ledit corps de soupape (1).

3. Soupape à bille (2) selon la revendication 1, **caractérisée en ce que** l'accouplement amovible avec engagement géométrique de ladite tige rotative (14) avec l'obturateur (7) est obtenu avec jeu et un engagement en contre-dépouille.

4. Soupape à bille (2) selon la revendication 3, **caractérisée en ce que** le jeu d'accouplement entre ladite tige rotative (14) et l'obturateur (7) et la configuration d'une portion d'extrémité intérieure profilée de latige rotative (14) sont aptes à permettre simultanément un engagement/découplage simple et un accouplement rotatif rigide et avec engagement en contre-dépouille entre ladite tige rotative (14) et l'obturateur (7).

5. Soupape à bille (2) selon la revendication 3, **caractérisée en ce que** l'accouplement avec engagement en contre-dépouille est obtenu en réalisant en queue d'aronde une portion d'extrémité d'accouplement (75) de la tige rotative (14) et un siège à fente (71) dans l'obturateur à bille creux (7).

6. Soupape à bille (2) selon la revendication 5, **caractérisée en ce que** le siège à fente (71) de l'obturateur (7) comprend des côtés étroits opposés (72, 73), arrondis ou biseautés à l'intérieur, dudit obturateur (7), et la portion d'extrémité d'accouplement (75) de la tige rotative présente des côtés étroits arrondi sur le fond (77).

7. Soupape à bille (2) selon une ou plusieurs des revendications précédentes 3 à 6, **caractérisée en ce que** entre la portion d'extrémité d'accouplement profilée (75) de la tige rotative (14) et la queue de ladite tige rotative (14) est présente une portion profilée d'accouplement géométrique (78) avec un ou plusieurs composants rotatifs rigides avec ladite tige rotative (14).

8. Soupape à bille (2) selon la revendication 1, **caractérisée en ce que** entre ladite tige de commande (14) et l'obturateur à bille (7) est rangé un élément d'accouplement amovible (19).

9. Soupape à bille (2) selon la revendication 8, **caractérisée en ce que** ledit élément d'accouplement (19) est un élément discoïdal ayant une cavité en U ouverte en haut (21) et comprenant des côtés parallèles s'engageant par un accouplement géométrique dans des encoches/fentes (12) formées dans une collerette (11) rigide avec ledit obturateur (7) et dans une portion d'extrémité intérieure (17) de ladite tige de commande (14), engagée dans ladite collerette d'obturateur (11).

10. Soupape à bille (2) selon la revendication 9, **caractérisée en ce que** ledit élément discoïdal (19) présente une circonférence extérieure sur laquelle sont formées deux butées (22, 23) coopérant avec des contre-butées formées sur le corps de soupape pour définir une limitation de mouvement rotatif de 90° pour ledit obturateur (7).

11. Soupape à bille (2) selon la revendication 1, **caractérisée en ce que** ladite couverture filetée (38) forme la portion d'extrémité inférieure d'un élément à vis (37) ayant une tige (41) avec au moins dans la partie supérieure une portion d'extrémité héxagonale ou quadrangulaire (43) apte à s'engager avec une clef dynamométrique ou similaire.

12. Soupape à bille (2) selon la revendication 11, **caractérisée en ce que** sur ladite tige (41) dudit élément à vis (37) est formé un filet (42).

13. Soupape à bille (2) selon les revendications 1, 11 et 12, **caractérisée en ce que** ladite soupape montée au ras (2) comprend des composants de finition conventionnels tels qu'un capuchon (44) (44) pour couvrir ledit élément à vis (37), une portion de prise de commande, par exemple en forme de poignée, et similaire.

14. Soupape à bille (2) selon au moins les revendications 1, 8 et 9, **caractérisée en ce que** ledit obturateur à bille (7) comprend une bride discoïdale de positionnement supérieure (9) et ladite collerette à fente (11).

15. Soupape à bille (2) selon la revendication 14, **caractérisée en ce que** ledit obturateur à bille (7) comprend une saillie cylindrique supérieure (13) s'étendant vers l'extérieur et pouvant être engagée dans une ouverture cylindrique correspondante (31) formée dans ladite partie inférieure (29) du corps de joint d'étanchéité (30), ou la partie inférieure de l'obturateur à bille peut être engagée directement dans ladite ouverture (31).

16. Soupape à bille (2) selon une ou plusieurs des revendications précédentes, **caractérisée en ce que** ledit obturateur (7B) est un obturateur à trois ou quatre voies, que le corps de joint d'étanchéité (30B) a une configuration en panier avec quatre ailes de joint (62, 63, 64, 65) et que ledit corps de soupape (1B) comprend par conséquent trois ou quatre raccords de liaison (3, 4, 66).

17. Soupape à bille (2) selon une ou plusieurs des revendications précédentes, **caractérisée en ce que** ladite tige de commande (14A) présente une portion d'extrémité extérieure comprenant une portion polygonale (41A) pour l'engagement avec une poignée (56), et une portion d'extrémité filetée (16A, 57) pour loger un écrou de blocage de la poignée, ladite poignée (56) étant interchangeable et formée avec toute disposition désirée, par exemple sous forme de levier, poignée haute, poignée à papillon, poignée à capuchon etc.
